# EUROPÄISCHE PATENTSCHRIFT

(11) **EP 2 774 877 B1**
(45) Veröffentlichungstag und Bekanntmachung des Hinweises auf die Patenterteilung: **03.02.2016**
(21) Anmeldenummer: 13157980.7
(22) Anmeldetag: 06.03.2013
(51) Int. Cl.: B65G 47/86, B67C 3/24

(54) **Greifvorrichtung zum Greifen und Halten von Flaschen, Dosen oder dergleichen Flüssigkeitsbehältern, Transportstern mit einer derartigen Greifvorrichtung und Herstellungsverfahren**
Gripper device for gripping and holding bottles, cans or similar fluid containers, transport star wheel with such a gripper device and manufacturing method
Dispositif de préhension destiné à saisir et à maintenir des bouteilles, des boîtes ou des récipients à liquide similaires, roue convoyeuse en étoile dotée d'un tel dispositif de préhension ainsi que le procédé de fabrication

(43) Veröffentlichungstag der Anmeldung: 10.09.2014
(73) Patentinhaber: Tyrolon-Schulnig GmbH, 6395 Hochfilzen (AT)
(72) Erfinder: Schulnig, Elmar, Ludwig, 6391 Fieberbrunn (AT)
(74) Vertreter: Rupprecht, Kay

(56) Entgegenhaltungen:
- EP-A1- 1 215 144
- EP-A1- 2 138 431
- JP-A- 10 045 250

## Beschreibung

Die Erfindung betrifft eine Greifvorrichtung zum Greifen und Halten von Flaschen, Dosen oder dergleichen Flüssigkeitsbehältern gemäß dem Oberbegriff des Patentanspruchs 1. Ferner betrifft die Erfindung einen Transportstern mit einer derartigen Greifvorrichtung und ein Verfahren zur Herstellung der Greifvorrichtung bzw. des Transportsterns.

Im Allgemeinen sind Greifvorrichtungen für Transportsterne bekannt, die zur Beförderung von Flaschen oder Dosen und ggfs. weiteren Flüssigkeitsbehältern, wie beispielsweise Getränkekartons, geeignet sind. Die Greifeinrichtungen umfassen üblicherweise wenigstens ein Greifarmpaar, das durch ein Betätigungsmittel von einer Offenstellung in eine Schließstellung überführbar ist. In der Schließstellung greift das Greifarmpaar den Flüssigkeitsbehälter und hält diesen fest. Die bekannten Greifvorrichtungen umfassen hierzu in üblicher Weise eine Nockenwelle, die mit den Greifarmen des Greifarmpaars zusammenwirkt. In Abhängigkeit der jeweiligen Stellung des Nockens der Nockenwelle wird das Greifarmpaar in die Offenstellung oder die Schließstellung überführt.

Die auf die Anmelderin zurückgehende WO 2011/083113 A1 zeigt eine derartige Greifvorrichtung, deren Greifarmpaar durch eine Nockenwelle betätigbar ist.

Die Nockenwelle ist bei bekannten Greifvorrichtungen üblicherweise in einem Grundelement gelagert, das als Gussteil ausgebildet ist. Die Herstellung eines Gussteils ist aufwändig und erfordert insbesondere einen Werkzeugwechsel, wenn unterschiedliche Grundelementgrößen herzustellen sind. Somit werden die Variationsvielfalt und die Herstellungsflexibilität durch das Grundelement begrenzt.

Aufgabe der Erfindung ist es, eine Greifvorrichtung zum Greifen und Halten von Flaschen, Dosen oder dergleichen Flüssigkeitsbehältern anzugeben, die einfach herstellbar ist und eine einfache Größenanpassung ermöglicht. Ferner ist es Aufgabe der Erfindung, einen Transportstern mit einer derartigen Greifvorrichtung sowie ein Verfahren zur Herstellung einer derartigen Greifvorrichtung bzw. eines derartigen Transportsterns anzugeben.

Erfindungsgemäß wird diese Aufgabe im Hinblick auf die Greifvorrichtung durch den Gegenstand des Patentanspruchs 1, im Hinblick auf den Transportstern durch den Gegenstand des Patentanspruchs 11 und im Hinblick auf das Herstellungsverfahren durch den Gegenstand des Patentanspruchs 12 gelöst.

Die Erfindung beruht auf dem Gedanken, eine Greifvorrichtung zum Greifen und Halten von Flaschen, Dosen oder dergleichen Flüssigkeitsbehältern mit wenigstens einem Greifarmpaar und wenigstens einem Betätigungsmittel zum Öffnen und Schließen des Greifarmpaars anzugeben, wobei das Betätigungsmittel eine Nockenwelle umfasst, die in einem Grundelement drehbar gelagert ist. Erfindungsgemäß ist das Grundelement als Blechteil ausgebildet.

Durch die Verwendung eines Blechteils im Gegensatz zu dem ursprünglich bekannten Gussteil wird die Variationsvielfalt bzw. die Vielseitigkeit der Greifvorrichtung erheblich gesteigert. Durch das Blechteil können auf einfache Weise mit üblichen Umformtechniken unterschiedlichen Größen von Grundelementen hergestellt werden. Dies spart Zeit, da ohne einen Werkzeugwechsel, d.h. mit geringen Umrüstzeiten, unterschiedliche Modelle produziert werden können. Während bei Gussteilen, die üblicherweise in Zulieferbetrieben hergestellt werden, mit Lieferzeiten zu rechnen ist, ist die Herstellung des Grundelements als Blechteil betriebsintern möglich, was kurze Reaktionszeiten ermöglicht. Zudem ist damit eine erhebliche Kosteneinsparung verbunden.

Ein weiterer Vorteil der erfindungsgemäßen Greifvorrichtung ist eine gegenüber bekannten Greifvorrichtungen, die Grundelemente aus Gussteilen aufweisen, reduzierte Masse. Dies führt zu Energieeinsparungen, insbesondere beim Betrieb von Flaschenabfüllanlagen, und erleichtert den Austausch von Greifvorrichtungen auf Transportsternen. Durch die Herstellungsvielfalt, die die einfache Herstellung des Grundelements aus einem Blechteil bietet, kann kurzfristig auf Kundenwünsche reagiert werden.

Bei einer bevorzugten Ausführungsform weist das Blechteil ein U-förmiges Profil auf. Das Grundelement kann generell einen einfachen Aufbau aufweisen, insbesondere derart, dass die Anzahl an Kanten bzw. Vertiefungen minimiert ist. Diese Kriterien können durch ein U-förmiges Profil des Blechteils erreicht werden. Das hat den Vorteil, dass die Greifvorrichtung leicht zu reinigen ist. Dieser Vorteil kommt insbesondere bei Greifvorrichtungen, die in der pharmazeutischen Industrie zum Einsatz gelangen, zum Tragen.

Das Blechteil kann zwei parallel zueinander angeordnete Lagerflansche und einen die Lagerflansche verbindenden Steg aufweisen, wobei der Steg und die Lagerflansch einstückig miteinander ausgebildet sind. Die Lagerflansche können die beiden Schenkel des U-förmigen Profils bilden, wobei der Steg einen verbindenden Boden des U-Profils bildet.

Vorzugsweise weisen die Lagerflansche jeweils eine Lagerbohrung zur Aufnahme der Nockenwelle auf. Mit anderen Worten kann sich die Nockenwelle zwischen den Lagerflanschen erstrecken. Insbesondere kann vorgesehen sein, dass die Lagerflansche durch Umbiegen eines plattenartigen Blechteils gebildet sind. Insgesamt kann aus einem plattenartigen, ursprünglich flachen Blechteil durch Umbiegen das U-förmige Blechteil gebildet werden. Die Nockenwelle wird von dem Blechteil bzw. dem Grundelement getragen und ist zwischen den Lagerflanschen drehbar angeordnet. Mit anderen Worten kann das Blechteil einen Lagerbock für die drehbar gelagerte Nockenwelle bilden.

Ferner kann vorgesehen sein, dass sich zwischen den Lagerflanschen zwei Haltestangen erstrecken, wobei jede Haltestange mit jeweils einem Greifarm des Greifarmpaars drehbar oder drehfest verbunden ist. Jede Haltestange kann eine Drehachse für den Greifarm bilden. Die Haltestangen können jeweils mit wenigstens einem Greifarm verbunden sein. Dabei kann entweder die Haltestange drehbar zwischen den Lagerflanschen des Blechteils angeordnet und mit dem Greifarm drehfest verbunden sein oder die Haltestange ist drehfest zwischen dem Lagerflanschen fixiert und der Greifarm ist drehbar an der Haltestange gelagert. Jedenfalls bildet die Haltestange eine Drehachse für den Greifarm. Die Rotation des Greifarms um die Drehachse, die durch die Haltestange gebildet ist, führt zur Bewegung des Greifarms von der Offenstellung in die Schließstellung und umgekehrt.

Die Haltestangen können in Bohrungen gelagert bzw. angeordnet sein, die in den Lagerflanschen ausgebildet sind. Die Lagerflansche weisen vorzugsweise jeweils zwei Bohrungen zur drehfesten oder drehbaren Aufnahme der Haltestangen auf.

Im Allgemeinen ermöglicht die Verwendung eines Blechteils als Grundelement, dass mit vergleichsweise einfachen Werkzeugen Bohrungen eingebracht werden können, die zur Aufnahme der Haltestangen und/oder der Nockenwelle dienen. Im Unterschied zu einem Gussteil ist ein Blechteil einerseits weniger massiv und weist andererseits Materialeigenschaften auf, die die Bildung einer Bohrung erleichtern.

Die erfindungsgemäße Greifvorrichtung kann in einer weiteren bevorzugten Ausführungsform zusätzlich einen Befestigungsflansch zur Verbindung mit einem Transportstern aufweisen. Der Befestigungsflansch erstreckt sich vorzugsweise parallel zu dem Lagerflansch. Der Befestigungsflansch ermöglicht eine einfache Verbindung der Greifvorrichtung mit einem Transportstern. Insbesondere ermöglicht der Befestigungsflansch die Verwendung der Greifvorrichtung bei üblichen Transportsternen, so dass diese mit der neuartigen Greifvorrichtung nachrüstbar sind.

Vorzugsweise ist der Befestigungsflansch fest, insbesondere stoffschlüssig, mit dem Steg des Blechteils verbunden. Ferner kann der Befestigungsflansch durch wenigstens eine Versteifungsrippe abgestützt sein, die mit dem Befestigungsflansch und dem Steg des Blechteils rechtwinklig und fest, insbesondere stoffschlüssig, verbunden ist. Mit anderen Worten kann sich die Versteifungsrippe zwischen dem Befestigungsflansch und dem Steg erstrecken, so dass die Versteifungsrippe jeweils sowohl zum Befestigungsflansch, als auch zum Steg des Blechteils rechtwinklig ausgerichtet ist. Die Versteifungsrippe stützt den Befestigungsflansch ab und trägt zur verbesserten Kraftübertragung vom Grundelement auf den Befestigungsflansch bei. Somit ist sichergestellt, dass die im Betrieb der Greifvorrichtung auftretenden hohen Kräfte über das Grundelement und den Befestigungsflansch auf den Transportstern übertragen werden. Die Standfestigkeit und Stabilität der Greifvorrichtung werden somit erhöht.

Der Steg des Blechteils kann ferner eine Ausnehmung aufweisen, die zwischen zwei Versteifungsrippen angeordnet ist. Insbesondere kann der Bereich des Stegs, der sich zwischen zwei Versteifungsrippen erstreckt, freigelegt sein bzw. als Ausnehmung ausgebildet sein. Dies trägt zur Gewichtsreduktion der Greifvorrichtung insgesamt bei und dient vorteilhaft der erleichterten Reinigung der Greifvorrichtung. Insbesondere ermöglicht die Ausnehmung den Zugang zur Nockenwelle und den Haltestangen, so dass diese für eine Reinigung leicht zugänglich sind.

Gemäß einem nebengeordneten Aspekt beruht die Erfindung auf dem Gedanken, einen Transportstern zum Transport von Flaschen, Dosen oder dergleichen Flüssigkeitsbehältern mit einer Zufuhr beschriebenen Greifvorrichtung anzugeben.

Ein weiterer Aspekt der Erfindung betrifft ein Verfahren zur Herstellung einer zuvor beschriebenen Greifvorrichtung oder eines zuvor beschriebenen Transportsterns, wobei in Endabschnitte eines flachen, plattenartigen Blechteils zunächst eine Lagerbohrung und zwei Aufnahmebohrungen eingebracht werden. Anschließend werden die Endabschnitte entlang jeweils einer Biegelinie derart umgeformt, dass die Endabschnitte parallel zueinander angeordnete Lagerflansche bilden. Das Verfahren ist einfach und mit vergleichsweise geringem Werkzeugaufwand durchführbar, wodurch die Produktionskosten reduziert werden. Hierbei können die Lagerbohrungen und/oder zwei Aufnahmebohrungen auch nach dem Umformen entlang einer Biegelinie eingebracht werden.

Die Erfindung wird im Folgenden anhand von Ausführungsbeispielen unter Bezugnahme auf die beigefügten, schematischen Zeichnungen näher erläutert. Darin zeigen
- Figur 1:: eine Seitenansicht der erfindungsgemäßen Greifvorrichtung nach einem bevorzugten Ausführungsbeispiel;
- Figur 2:: eine vorderer perspektivische Ansicht der Greifvorrichtung gemäß Figur 1; und
- Figur 3:: eine hintere perspektivische Ansicht der Greifvorrichtung gemäß Figur 1.

Die Figuren zeigen insgesamt eine Greifvorrichtung, die zum Greifen und Halten von Flaschen, Dosen oder ähnlichen Flüssigkeitsbehältern geeignet ist. Beispielsweise kann die Greifvorrichtung auch zum Greifen und Halten von Getränkekartons genutzt werden. Der nachfolgend beschriebene Grundaufbau bzw. das Grundfunktionsprinzip ist für alle Ausführungsformen der Erfindung anwendbar und insbesondere für alle Anwendungsbereiche beim Transport von Flüssigkeitsbehältern nutzbar. Für das Greifen und Halten unterschiedlicher Flüssigkeitsbehälter ist es ausreichend, lediglich entsprechende Greifarmpaare 11, 12, 13 vorzusehen. Vorzugsweise sind die Greifarme 14, 15 der Greifarmpaare 11, 12, 13 zumindest abschnittsweise an die Form des zu transportierenden Flüssigkeitsbehälters angepasst.

Die Greifvorrichtung 10 weist bei dem dargestellten Ausführungsbeispiel drei Greifarmpaare 11, 12, 13 auf. Eine andere Anzahl von Greifarmpaaren 11, 12, 13 ist möglich. Beispielsweise kann die Greifvorrichtung 10 ein einziges Greifarmpaar 11, 12, 13 aufweisen.

Die Greifarmpaare 11, 12, 13 weisen grundsätzlich jeweils zwei Greifarme 14, 15 auf, die im Wesentlichen komplementär zueinander ausgebildet sind. Die Greifarme 14, 15 sind in einen Greifabschnitt 17 und einen Betätigungsabschnitt 18 unterteilt. Die Betätigungsabschnitte 18 der Greifarme 14, 15 können im Wesentlichen identisch ausgebildet sein. Somit bildet der Betätigungsabschnitt 18 ein Standardbauteil, das eine günstige Serienfertigung erlaubt.

Bei dem dargestellten Ausführungsbeispiel sind ein mittleres Greifarmpaar 12 und ein unteres Greifarmpaar 13 identisch ausgebildet. Ein oberes Greifarmpaar 11 weicht in seiner Form von dem mittleren Greifarmpaar 12 und dem unteren Greifarmpaar 13 ab. Das untere Greifarmpaar 13 und das mittlere Greifarmpaar 12 weisen zudem identische Greifabschnitte 17 auf. Der Greifabschnitt 17 des oberen Greifarmpaars 11 weist gegenüber dem Greifabschnitt 17 des mittleren Greifarmpaars 12 und des unteren Greifarmpaars 13 eine andersartige Form auf. Insbesondere ist der Greifabschnitt 17 des oberen Greifarmpaars 11 doppelt abgewinkelt, so dass der Abstand zwischen dem Greifabschnitt 17 des oberen Greifarmpaars 11 und des mittleren Greifarmpaars 12 größer als der Abstand zwischen den Greifabschnitten 17 des mittleren Greifarmpaars 12 und des unteren Greifarmpaars 13 ist. Der Greifabschnitt 17 des oberen Greifarmpaars 11 dient vorzugsweise zum Halten eines Flaschenhalses bzw. einer oberen Hälfte einer Flasche, wogegen die untere Greifarmpaare 12, 13 den Flaschenkörper halten.

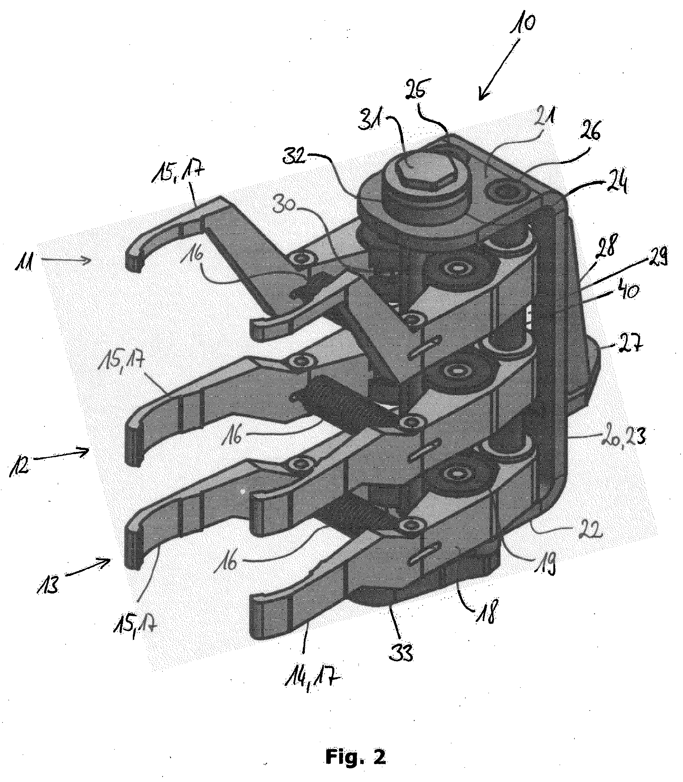

Wie in Fig. 2 gut erkennbar ist, erstreckt sich zwischen den Greifarmen 14, 15 eines Greifarmpaars 11, 12, 13 jeweils eine Zugfeder 16. Die Zugfeder 16 ist insbesondere im Übergang zwischen dem Greifabschnitt 17 und dem Betätigungsabschnitt 18 angeordnet. Da der Greifabschnitt 17 und der Betätigungsabschnitt 18 separate Bauteile darstellen, die miteinander verbunden sind, ist die Anordnung der Zugfeder 16 im Übergang zwischen Greifabschnitt 17 und dem Betätigungsabschnitt 18 besonders einfach möglich. Alternativ kann anstelle der Zugfeder auch eine Druckfeder eingesetzt werden, die in einem hinteren Teil des Betätigungsabschnitts 18 angeordnet ist, insbesondere zwischen einer Haltestange 40 und einem Steg 23 eines Grundelements 20.

Die Greifarme 14, 15 der Greifvorrichtung 10 sind gelenkig in einem Grundelement 20 gelagert. Dazu sind in dem Grundelement 20 zwei Haltestangen 40 angeordnet, die jeweils eine Drehachse für einen Greifarm 14, 15 bilden. Die Haltestange 40 kann drehfest in dem Grundelement 20 angeordnet sein. In diesem Fall ist vorgesehen, dass die Greifarme 14, 15 an der Haltestange 40 drehgelagert sind. Alternativ ist es möglich, dass die Greifarme 14, 15 jeweils mit einer Haltestange 40 drehfest verbunden sind und die Haltestange 40 in den Grundelementen 20 drehbar gelagert ist. In jedem Fall ist die Haltestange 40 drehfest oder drehbar mit dem Betätigungsabschnitt 18 des Greifarms 14, 15 verbunden.

Zwischen der Haltestange 40 und dem Greifabschnitt 17 umfasst der Betätigungsabschnitt 18 jeweils eine Führungsrolle 19. Die Führungsrollen 19 der Greifarme 14, 15 eines Greifarmpaars 11, 12, 13 sind auf einer einander zugewandten Seite des Betätigungsabschnitts 18 angeordnet. Mit anderen Worten sind die Führungsrollen 19 zueinander gerichtet. Die Rotationsachse der Führungsrollen 19 erstreckt sich parallel zu den Drehachsen der Greifarme 14, 15.

Die Führungsrollen 19 wirken mit Nocken einer Nockenwelle 30 zusammen, die drehbar im Grundelement 20 gelagert ist. Die Nockenwelle 30 erstreckt sich mittig zwischen den Greifarmen 14, 15 der Greifarmpaare 11, 12, 13. Die Nockenwelle 30 weist eine Rotationsachse auf, die parallel zur Drehachse der Greifarme 14, 15 ausgerichtet ist. Mit anderen Worten erstreckt sich die Nockenwelle 30 parallel zu den Haltestangen 40. Die Nockenwelle 30 ist sowohl zwischen den Greifarmen 14, 15, als auch zwischen den Haltestangen 40 und der Zugfeder 16 angeordnet.

Die Nockenwelle 30 bildet ein Betätigungsmittel für die Greifarmpaare 11, 12, 13. Dazu ist die Nockenwelle 30 drehbar im Grundelement 20 gelagert. Das Grundelement 20 ist durch ein Blechteil gebildet. Die Verwendung eines Blechteils ermöglicht einen gewichtsoptimierten und einfach herzustellenden Aufbau der Greifvorrichtung 10. Das Blechteil bzw. Grundelement 20 ist plattenartig aufgebaut und im Bereich der Endabschnitte umgebogen, so dass zwei parallel zueinander angeordnete Lagerflansche 21, 22 gebildet sind. Grundsätzlich weist das Grundelement 20 ein U-förmiges Profil auf, wobei die Schenkel des Profils durch die Lagerflansche 21, 22 und der Boden des Profils durch einen Steg 23 gebildet sind. Der Steg 23 verbindet einen oberen Lagerflansch 21 mit einem unteren Lagerflansch 22. Der obere Lagerflansch 21, der untere Lagerflansch 22 und der Steg 23 sind einteilig bzw. einstückig ausgebildet. Konkret sind die Lagerflansche 21, 22 bei der Herstellung durch Umformen der Endabschnitte des Grundelements 20 gebildet. Dabei werden die Endabschnitte entlang jeweils einer Biegelinie umgebogen, so dass sich das U-förmige Profil des Blechteils ergibt.

Die Verwendung eines Blechteils als Grundelement 20 hat den besonderen Vorteil, dass auf diese Weise das Grundelement 20 an unterschiedliche Anforderungen bzw. Kundenwünsche hinsichtlich der Gestaltung der Greifvorrichtung anpassbar ist. So können einfach unterschiedliche Abstände zwischen dem oberen Lagerflansch 21 und dem unteren Lagerflansch 22 eingestellt werden. Dies ist beispielsweise sinnvoll, wenn eine andere Anzahl von Greifarmpaaren 11, 12, 13 vorgesehen sein soll.

Die Lagerflansche 21, 22 weisen jeweils zwei Aufnahmebohrungen 25, 26 auf. Die Aufnahmebohrungen 25, 26 nehmen die Haltestangen 40 auf. Dabei können die Aufnahmebohrungen 25, 26 als Lager für die Drehlagerung der Haltestangen 40 ausgebildet sein. Bevorzugt ist es, wenn die Haltestangen 40 fest, insbesondere drehfest, in den Aufnahmebohrungen 25, 26 angeordnet sind. Beispielsweise können die Haltestangen 40 in die Aufnahmebohrungen 25, 26 eingepresst sein. Die für die Bewegung der Greifarmpaare 11, 12, 13 erforderliche Drehlagerung besteht dann zwischen den Greifarmen 14, 15 und den Haltestangen 40.

Ferner weisen die Lagerflansche 21, 22 jeweils eine Lagerbohrung 24 auf. Die Lagerbohrungen 24 nehmen die Nockenwelle 30 auf, die sich zwischen den Lagerflanschen 21, 22 erstreckt. Im Bereich der Lagerbohrung 24 können der obere Lagerflansch 21 und/oder der untere Lagerflansch 22 eine Lagerhülse 32 aufweisen. Die Lagerhülse 32 kann mit dem Lagerflansch 21, 22 fest verbunden, insbesondere verschweißt, verschraubt oder verpresst sein. Die Lagerhülse 32 ist vorzugsweise auf einer Außenseite des Lagerflanschs 21, 22 angeordnet.

Am axialen Ende der Nockenwelle 30 ist zumindest im Bereich des oberen Lagerflanschs 21, vorzugsweise auch im Bereich des unteren Lagerflanschs 22, eine Lagerschraube 31 vorgesehen. Die Lagerschraube 31 ist koaxial zur Nockenwelle 30 ausgerichtet. Mit Hilfe der Lagerschraube 31 ist die Nockenwelle 30 fixiert, wobei eine Rotationsbewegung weiterhin möglich ist.

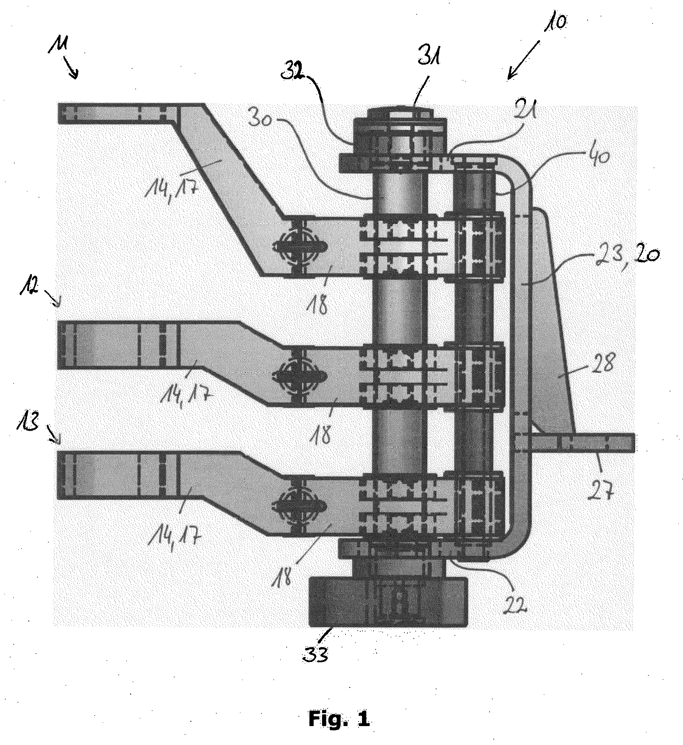

Bei dem Ausführungsbeispiel gemäß Figuren 1-3 ist am oberen Ende der Nockenwelle 30 die Lagerschraube 31 angeordnet. Am unteren Ende der Nockenwelle 30 ist ein Betätigungshebel 33 erkennbar. Der Betätigungshebel 33 ist dazu geeignet, mit einem entsprechenden Bolzen eines Transportsterns zusammenzuwirken, so dass die Nockenwelle 30 drehbar ist. Durch Drehung der Nockenwelle 30 wird mittels der Nocken eine Kraft auf die Greifarme 14, 15 der Greifarmpaare 11, 12, 13 ausgeübt. Diese Kraft wirkt entgegen der Zugkraft der Zugfeder 16, so dass die Greifarme 14, 15 auseinander gedrückt werden. In der auseinander gedrückten Stellung sind die Greifarmpaare 11, 12, 13 geöffnet. Dies entspricht der Offenstellung der Greifarmpaare 11, 12, 13. Sobald die Nockenwelle um etwa 90° gedreht ist, lässt die die Greifarme 14, 15 nach außen drängende Kraft nach, so dass die Zugkraft der Zugfeder 16 überwiegt. Folglich werden die Greifarme 14, 15 zueinander gezogen. Mit anderen Worten werden die Greifarmpaare 11, 12, 13 geschlossen. Dies entspricht der Schließstellung der Greifarmpaare 11, 12, 13.

Die Verbindung der Greifvorrichtung 10 mit einem Transportstern erfolgt bei dem Ausführungsbeispiel gemäß den beigefügten Figuren durch einen Befestigungsflansch 27, der mit dem Grundelement 20 fest verbunden ist. Der Befestigungsflansch 27 erstreckt sich parallel zu den Lagerflanschen 21, 22 und ist an einer Rückseite des Stegs 23 angebracht. Vorzugsweise ist der Befestigungsflansch 27 mit dem Steg 23 fest verbunden, insbesondere pressverbunden. Es ist auch möglich, dass der Befestigungsflansch 27 mit dem Steg 23 stoffschlüssig verbunden ist, beispielsweise geschweißt. Der Befestigungsflansch 27 umfasst eine Öffnung 41, in die ein Bolzen eines Transportsterns eingreifen kann. So ist eine formschlüssige Verbindung zwischen der Greifvorrichtung 10 und dem Transportstern gewährleistet.

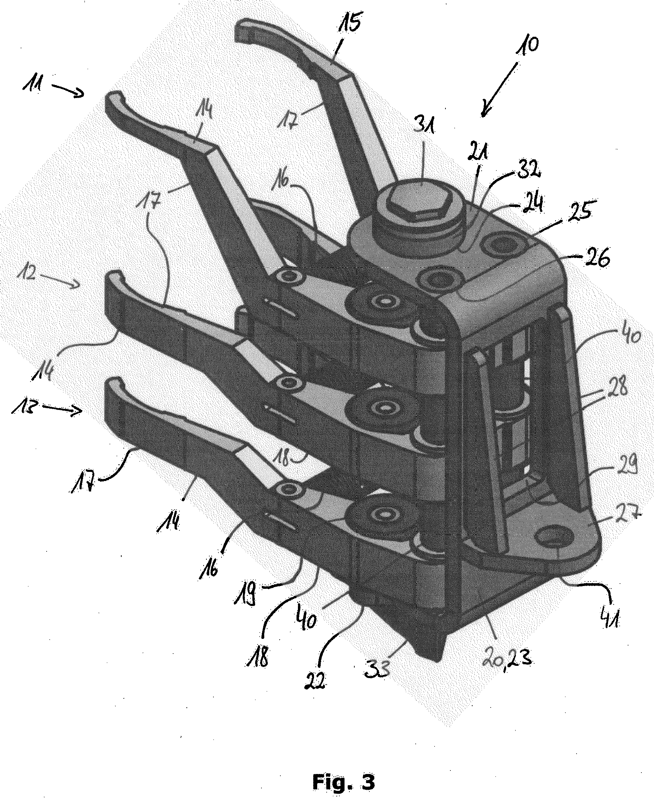

In Fig. 3 ist deutlich erkennbar, dass der Befestigungsflansch 27 durch Versteifungsrippen 28 abgestützt ist. Die Versteifungsrippen 28 sind mit dem Befestigungsflansch 27 und dem Steg 23 des Grundelements 20 verbunden. Die Verbindung kann durch Schweißen oder durch eine Pressverbindung erfolgen. Die Versteifungsrippen 28 sind jeweils zum Steg 23 und zum Befestigungsflansch 27 rechtwinklig ausgerichtet.

Zwischen den Versteifungsrippen 28 erstreckt sich im Steg 23 eine Ausnehmung 29. Die Ausnehmung 29 ist fensterartig ausgebildet bzw. weist im Wesentlichen ein rechteckiges Profil mit abgerundeten Kanten auf. Die Ausnehmung 29 dient im Wesentlichen der Gewichtsreduktion. Es hat sich gezeigt, dass im Bereich zwischen den Versteifungsrippen 28 kaum Kräfte auf den Steg 23 wirken, so dass in diesem Bereich eine Materialeinsparung ohne signifikante Stabilitätseinbußen möglich ist. Zusätzlich erleichtert die Ausnehmung 29 den Zugang zu den Haltestangen 40 und der Nockenwelle 30, so dass das Innenleben der Greifvorrichtung 10 gut zu reinigen ist. So weist die Greifvorrichtung 10 gute hygienische Eigenschaften auf, was insbesondere für die pharmazeutische Industrie (für sterile Arbeitsbedingungen) und somit für die einfache Reinigung/Sterilisation von Belang ist.

In Fig. 3 ist außerdem andeutungsweise erkennbar, dass die Greifarme 14, 15 im Bereich der Haltestangen 40 ein ineinandergreifendes Zahnprofil aufweisen. Die ineinander greifenden Zähne der Greifarme 14, 15 stellen sicher, dass die Greifarme 14, 15 paarweise betätigbar sind. Das bedeutet, dass auch bei möglicherweise einseitiger Abnutzung der Nocken der Nockenwelle gewährleistet ist, dass beide Greifarme 14, 15 simultan betätigbar sind.

### Bezugszeichenliste

- 10: Greifvorrichtung
- 11: oberes Greifarmpaar
- 12: mittleres Greifarmpaar
- 13: unteres Greifarmpaar
- 14, 15: Greifarm
- 16: Zugfeder
- 17: Greifabschnitt
- 18: Betätigungsabschnitt
- 19: Führungsrolle
- 20: Grundelement
- 21: oberer Lagerflansch
- 22: unterer Lagerflansch
- 23: Steg
- 24: Lagerbohrung
- 25, 26: Aufnahmebohrung
- 27: Befestigungsflansch
- 28: Versteifungsrippe
- 29: Ausnehmung
- 30: Nockenwelle
- 31: Lagerschraube
- 32: Lagerhülse
- 33: Betätigungshebel
- 40: Haltestange
- 41: Öffnung

## Patentansprüche

1. Greifvorrichtung (10) zum Greifen und Halten von Flaschen, Dosen oder dergleichen Flüssigkeitsbehältern mit wenigstens einem Greifarmpaar (11, 12, 13) und wenigstens einem Betätigungsmittel zum Öffnen und Schließen des Greifarmpaars (11, 12, 13), wobei das Betätigungsmittel eine Nockenwelle (30) umfasst, die in einem Grundelement (20) drehbar gelagert ist,
**dadurch gekennzeichnet, dass**
das Grundelement (20) als Blechteil mit U-förmigen Profil ausgebildet ist.

2. Greifvorrichtung nach Anspruch 1,
**dadurch gekennzeichnet, dass**
das Blechteil zwei parallel zueinander angeordnete Lagerflansche (21, 22) und einen die Lagerflansche (21, 22) verbindenden Steg (23) aufweist, wobei der Steg und die Lagerflansche (21, 22) einstückig miteinander ausgebildet sind.

3. Greifvorrichtung nach Anspruch 2,
**dadurch gekennzeichnet, dass**
die Lagerflansche (21, 22) jeweils eine Lagerbohrung (24) zur Aufnahme der Nockenwelle (30) aufweisen.

4. Greifvorrichtung nach Anspruch 2 oder 3,
**dadurch gekennzeichnet, dass**
sich zwischen den Lagerflanschen (21, 22) zwei Haltestangen (40) erstrecken, wobei jede Haltestange (40) mit jeweils einem Greifarm (14, 15) des Greifarmpaars (11, 12, 13) drehbar oder drehfest verbunden ist und eine Drehachse für den Greifarm (14, 15) bildet.

5. Greifvorrichtung nach einem der Ansprüche 2 bis 4,
**dadurch gekennzeichnet, dass**
die Lagerflansche (21, 22) jeweils zwei Aufnahmebohrungen (25, 26) zur drehfesten oder drehbaren Aufnahme der Haltestangen (40) aufweisen.

6. Greifvorrichtung nach einem der Ansprüche 2 bis 5,
**gekennzeichnet durch**
einen Befestigungsflansch (27) zur Verbindung mit einem Transportstern, wobei sich der Befestigungsflansch (27) parallel zu den Lagerflanschen (21, 22) erstreckt.

7. Greifvorrichtung nach Anspruch 6,
**dadurch gekennzeichnet, dass**
der Befestigungsflansch (27) fest, insbesondere stoffschlüssig, mit dem Steg (23) des Blechteils verbunden ist.

8. Greifvorrichtung nach Anspruch 6 oder 7,
**dadurch gekennzeichnet, dass**
der Befestigungsflansch (27) durch wenigstens eine Versteifungsrippe (28) abgestützt ist, die rechtwinklig mit dem Befestigungsflansch (27) und dem Steg (23) des Blechteils fest, insbesondere stoffschlüssig, verbunden ist.

9. Greifvorrichtung nach Anspruch 8,
da durch **gekennzeichnet**, dass
der Steg (23) eine Ausnehmung (29) aufweist, die zwischen zwei Versteifungsrippen (28) angeordnet ist.

10. Transportstern zum Transport von Flaschen, Dosen oder dergleichen Flüssigkeitsbehältern mit einer Greifvorrichtung (10) nach einem der vorhergehenden Ansprüche.

11. Verfahren zur Herstellung einer Greifvorrichtung (10) oder eines Transportsterns nach einem der vorhergehenden Ansprüche, wobei in Endabschnitte eines flachen, plattenartigen Blechteils zunächst eine Lagerbohrung (24) und zwei Aufnahmebohrungen (25, 26) eingebracht werden und die Endabschnitte entlang jeweils einer Biegelinie umgeformt werden derart, dass die Endabschnitte parallel zueinander angeordnete Lagerflansche (21, 22) bilden.

12. Verfahren nach Anspruch 11, **dadurch gekennzeichnet, dass** der Schritt des Umformens der Endabschnitte zeitlich vor oder nach dem Schritt des Einbringens der Lagerbohrung (24) und/oder der Aufnahmebohrungen (25, 26) erfolgt.

## Claims

1. A gripper device (10) for gripping and holding bottles, cans or similar fluid containers comprising at least one gripper arm pair (11, 12, 13) and at least one actuating means for opening and closing the gripper arm pair (11, 12, 13), wherein the actuating means comprises a camshaft (30) rotatably mounted in a base element (20),
**characterized in that**
the base element (20) is formed as a sheet metal part having a U-shaped profile.

2. The gripper device according to claim 1,
**characterized in that**
the sheet metal part comprises two bearing flanges (21, 22) arranged parallel to one another and a crosspiece (23) connecting the bearing flanges (21, 22), wherein the crosspiece and the bearing flanges (21, 22) are integrally formed together.

3. The gripper device according to claim 2,
**characterized in that**
each bearing flange (21, 22) has a bearing bore (24) for receiving the camshaft (30).

4. The gripper device according to claim 2 or 3,
**characterized in that**
two support rods (40) extend between the bearing flanges (21, 22), wherein each support rod (40) is rotatably or non-rotatably connected to a respective gripper arm (14, 15) of the gripper arm pair (11, 12, 13) and forms a rotational axis for the gripper arm (14, 15).

5. The gripper device according to any one of claims 2 to 4,
**characterized in that**
each bearing flange (21, 22) comprises two receiving bores (25, 26) for non-rotatably or rotatably accommodating the support rods (40).

6. The gripper device according to any one of claims 2 to 5,
**characterized by**
a mounting flange (27) for connecting to a star conveyor, wherein the mounting flange (27) extends parallel to the bearing flanges (21, 22).

7. The gripper device according to claim 6,
**characterized in that**
the mounting flange (27) is permanently connected, particularly materially bonded, to the crosspiece (23) of the sheet metal part.

8. The gripper device according to claim 6 or 7,
**characterized in that**
the mounting flange (27) is supported by at least one reinforcing rib (28) which is permanently connected, particularly materially bonded, at a right angle to the mounting flange (27) and the crosspiece (23) of the sheet metal part.

9. The gripper device according to claim 8,
**characterized in that**
the crosspiece (23) comprises a cut (29) arranged between two reinforcing ribs (28).

10. A star conveyor for transporting bottles, cans or similar fluid containers comprising a gripper device (10) in accordance with any one of the preceding claims.

11. A method for manufacturing a gripper device (10) or a star conveyor according to any one of the preceding claims, wherein a bearing bore (24) and two receiving bores (25, 26) are first cut in end sections of a flat, plate-like sheet metal part and each end section is respectively formed along a bending line such that the end sections form bearing flanges (21, 22) arranged parallel to one another.

12. The method according to claim 11, **characterized in that** the step of forming the end sections occurs prior to or subsequent the step of cutting the bearing bore (24) and/or the receiving bores (25, 26).

## Revendications

1. Dispositif de préhension (10) pour saisir et maintenir des bouteilles, des boîtes ou des récipients à liquide similaires, comprenant au moins une paire de bras de préhension (11, 12, 13) et au moins un moyen d'actionnement pour ouvrir et fermer la paire de bras de préhension (11, 12, 13), dans lequel le moyen d'actionnement inclut un arbre à cames (30), qui est monté en rotation dans un élément de base (20),
**caractérisé en ce que**
l'élément de base (20) est réalisé sous forme d'une pièce en tôle avec un profil en forme de U.

2. Dispositif de préhension selon la revendication 1,
**caractérisé en ce que** la pièce en tôle comprend deux brides de montage (21, 22) agencées parallèlement l'une à l'autre, et une âme (23) qui relie les brides de montage (21, 22), dans lequel l'âme et les brides de montage (21, 22) sont réalisées d'une seule pièce les unes avec les autres.

3. Dispositif de préhension selon la revendication 2,
**caractérisé en ce que** les brides de montage (21, 22) comportent chacune un perçage de montage (24) pour la réception de l'arbre à cames (30).

4. Dispositif de préhension selon la revendication 2 ou 3,
**caractérisé en ce que** deux barres de maintien (40) s'étendent entre les brides de montage (21, 22), et chaque barre de maintien (40) est reliée avec possibilité de rotation ou solidaire en rotation avec un bras de préhension (14, 15) respectif de la paire de bras de préhension (11, 12, 13), et forme un axe de rotation pour le bras de préhension (14, 15).

5. Dispositif de préhension selon l'une des revendications 2 à 4,
**caractérisé en ce que** les brides de montage (21, 22) comportent chacune de perçage de réception (25, 26) pour recevoir les barres de maintien (40) solidairement en rotation ou avec possibilité de rotation.

6. Dispositif de préhension selon l'une des revendications 2 à 5,
**caractérisé par** une bride de fixation (27) pour la liaison avec une étoile de transport, et la bride de fixation (27) s'étend parallèlement aux brides de montage (21, 22).

7. Dispositif de préhension selon la revendication 6,
**caractérisé en ce que** la bride de fixation (27) est reliée fermement, et en particulier par coopération de matières, avec l'âme (23) de la pièce en tôle.

8. Dispositif de préhension selon la revendication 6 ou 7,
**caractérisé en ce que** la bride de fixation (27) est soutenue par au moins une nervure de rigidification (28), laquelle est reliée à angle droit avec la bride de fixation (27) et avec l'âme (23) de la pièce en tôle, de manière ferme et en particulier par coopération de matières.

9. Dispositif de préhension selon la revendication 8,
**caractérisé en ce que** l'âme (23) comporte un évidement (29) qui est agencé entre deux nervures de rigidification (28).

10. Étoile de transport pour le transport de bouteilles, de boîtes ou de récipients à liquide similaires, comprenant un dispositif de préhension (10) selon l'une des revendications précédentes.

11. Procédé pour la fabrication d'un dispositif de préhension (10) ou d'une étoile de transport selon l'une des revendications précédentes, dans lequel on ménage tout d'abord un perçage de montage (24) et deux perçages de réception (25, 26) dans les portions d'extrémité d'une pièce en tôle plane semblable à une plaque, et les portions d'extrémité sont déformées le long d'une ligne de pliage respective de telle façon que les portions d'extrémité forment des brides de montage (21, 22) agencées parallèlement l'une à l'autre.

12. Procédé selon la revendication 11, **caractérisé en ce que** l'étape de déformation des portions d'extrémité a lieu dans le temps avant ou après l'étape consistant à ménager le perçage de montage (24) et/ou les perçages de réception (25, 26).
